**Europäisches Patentamt**

**European Patent Office**

**Office européen des brevets**

(19)

(11) Veröffentlichungsnummer: **0 457 122 A2**

## EUROPÄISCHE PATENTANMELDUNG

(21) Anmeldenummer: **91107159.5**

(22) Anmeldetag: **03.05.91**

(51) Int. Cl.⁵: **A01F 12/40, A01F 29/20**

(30) Priorität: **16.05.90 DE 4015662**

(43) Veröffentlichungstag der Anmeldung:
**21.11.91 Patentblatt 91/47**

(84) Benannte Vertragsstaaten:
**BE DE DK FR GB IT**

(71) Anmelder: **DEERE & COMPANY**
**1 John Deere Road**
**Moline, Illinois 61265(US)**

(72) Erfinder: **Dannigkeit, Helmut**
**Lerchenstrasse 6**
**W-6661 Battweiler(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Trennleiste.**

㊷

2.1. Herkömmliche Trennleisten dienen innerhalb einer Zerkleinerungsvorrichtung, z. B. innerhalb eines Strohhäckslers eines Mähdreschers zum Zerkleinern von Häckselgut. Es wird bemängelt, daß das solchermaßen zerkleinerte Häckselgut beim Einarbeiten in den Boden nicht schnell genug verrottet.

2.2. Es wird vorgeschlagen, an den sich jeweils gegenüberliegenden Seitenflächen (18) der Trennleisten (10) und/ oder benachbarter weiterer Trennleisten (10') scharfkantige Erhebungen (16) anzubringen, die die Oberfläche des Häckselguts zerstören.

2.3. Derartige Trennleisten (10, 10') finden Anwendung bei Strohhäckslern, Mähschlagzettern, Mulchern und Stroh-Schreddern.

FIG. 2

Die Erfindung betrifft eine Trennleiste für die Zerkleinerung von Häckselgut, die während des Zerkleinerungsvorgangs zwischen weiteren Trennleisten hindurchgeführt wird.

Trennleisten sind von Zerkleinerungsvorrichtungen, insbesondere an Mähdreschern, bekannt und dienen dem Zerkleinern von Stengeln von geerntetem Gut; in den meisten Fällen wird das Stroh von Getreide hiermit zerkleinert. Solchermaßen zerkleinerte Erntegutreste können problemlos in den Boden mittels eines Pflugs, einer Fräse oder einer Scheibenegge eingearbeitet werden.

Bei einer üblichen Ausführungsform (DE-OS-36 26 456) sind eine Vielzahl von Trennleisten als pendelnde Schlegel an einem schnell umlaufenden Rotor befestigt und an den Seitenkanten angeschliffen.

Bei anderen bekannten Ausführungsformen sind in die Seitenkanten Zähne eingearbeitet, die einen besseren Schnitt (DE-OS-36 31 485) oder einen Zerreißeffekt (US-PS-2,862, 536, DE-OS-38 23 116) erbringen.

Es hat sich aber auch bei den Trennleisten nach der bekannten Bauart gezeigt, daß die in relativ kleine Stücke geschnittenen Erntegutreste im Boden noch eine hohe Verrottungszeit haben und somit den nachfolgenden Stoffwechsel im Boden beeinträchtigen.

Die der Erfindung zugrunde liegende Aufgabe wird darin gesehen, eine Trennleiste vorzuschlagen, die sowohl geeignet ist, das Häckselgut in kurze Stücke zu teilen, als auch das Häckselgut in einen für die Verrottung günstigen Zustand zu bringen.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird das Häckselgut zusätzlich an den Flächen zwischen benachbarten Trennleisten zerrieben, so daß es schneller verrottet; die einzelnen Halme werden längs aufgerissen. Die scharfkantigen Erhebungen können sowohl an den Trennleisten, als auch an den weiteren Trennleisten, wie auch an beiden vorgesehen werden.

Ausbuchtungen in den Seitenflächen der Trennleisten und/oder den weiteren Trennleisten können durch Stanz-, Präge- oder Schmiedevorgänge erzeugt werden und erhalten durch die damit einhergehende Oberflächenverdichtung eine hohe Festigkeit.

Sollen die Kanten außerordentlich scharf sein, kommt eine Oberflächenbearbeitung durch Rändeln, Prägen, Fräsen oder dergleichen in Betracht.

Sind die vorgenannten Erhebungen auf allen sich gegenüberliegenden Seitenflächen, möglicherweise in größerer Stückzahl und auch an Stirnflächen angebracht, wird der Zerreißeffekt um so größer.

Infolge des erhöhten Reibwiderstands beim Eintreten von Häckselgut in den Spalt zwischen den Trennleisten und den weiteren Trennleisten ist es zur Erhöhung der Laufruhe eines mit den Trennleisten bestückten Rotors zweckmäßig, einige der Trennleisten pendelnd aufzuhängen, so daß sie in Umfangsrichtung geringfügig ausweichen können.

Ein besserer Schnitt bei Erhöhung der Standzeit der Trennleiste wird durch die Anbringung von Anschliffen an den Seitenkanten, vorzugsweise mit Wellenschliff, erreicht.

In der Zeichnung sind nachfolgend näher beschriebene Ausführungsbeispiele der Erfindung dargestellt. Es zeigt:

Fig. 1   eine erste Ausführungsform einer Trennleiste in Vorderansicht

Fig. 2   eine Trennleiste nach Figur 1 und weitere Trennleisten in Seitenansicht,

Fig. 3   eine zweite Ausführungsform einer Trennleiste in Vorderansicht,

Fig. 4   eine Trennleiste nach Figur 3 und weitere Trennleisten in Seitenansicht,

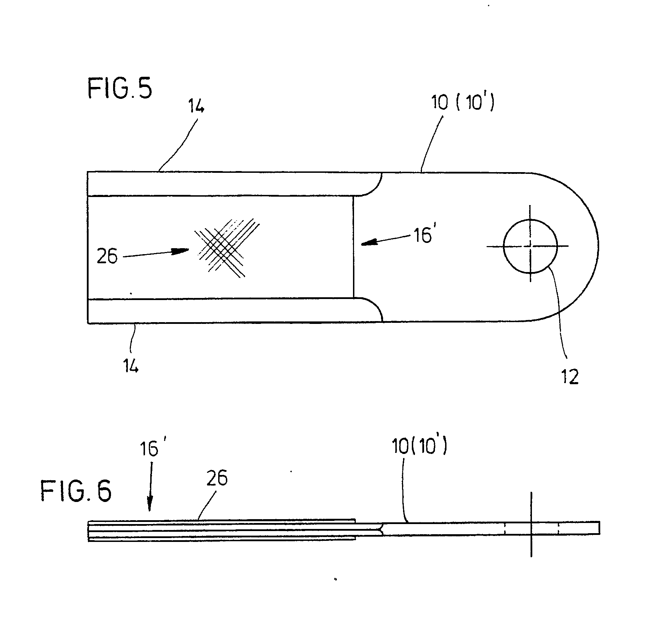

Fig. 5   eine dritte Ausführungsform einer Trennleiste in Vorderansicht und

Fig. 6   die Trennleiste nach Figur 5 in Seitenansicht.

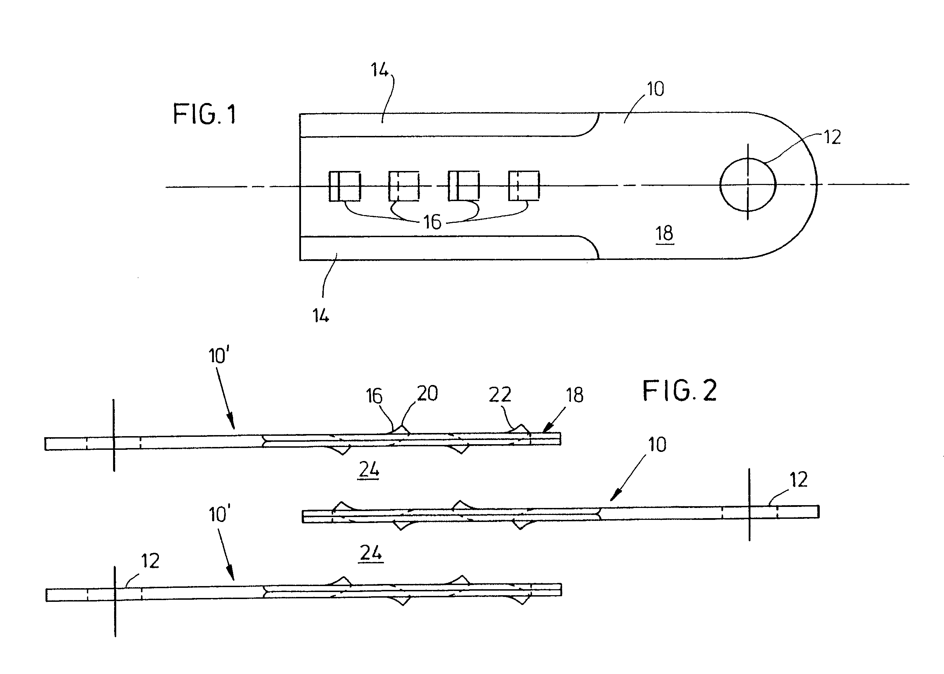

Eine in Figur 1 gezeigte Trennleiste 10 hat einen im wesentlichen rechteckförmigen Grundriß und weist in seinem mit Blick auf die Zeichnung rechten Endbereich mittig eine Bohrung 12, in seinem linken Endbereich an den Seitenkanten Anschliffe 14 und ebenfalls in seinem linken Endbereich symmetrisch zu seiner Längsmittenachse angeordnete scharfkantige Erhebungen 16 auf.

Die Trennleiste 10 ist Bestandteil einer ansonsten nicht gezeichneten Zerkleinerungsvorrichtung in der Art eines an einem Mähdrescher angebauten Strohhäckslers. Andere Zerkleinerungsvorrichtungen, in denen die erfindungsgemäßen Trennleisten ebenfalls verwendet werden können, sind Mulcher, Stroh- oder Abfall-Schredder, Mähschlagzetter und dergleichen. Je nach der Bauart der Zerkleinerungsvorrichtung können derartige Trennleisten 10 pendelnd oder starr an einem sich schnell drehenden Rotor befestigt werden. Die Trennleisten 10 werden aus Stahl geschmiedet und haben eine hohe Festigkeit.

Den Trennleisten 10 sind weitere Trennleisten 10' zugeordnet, die grundsätzlich, aber nicht unbedingt, in gleicher Weise ausgebildet sind und starr an einem Gehäuse oder Träger angreifen; insofern beziehen sich die folgenden Ausführungen auch auf die weiteren Trennleisten 10'.

Die Bohrung 12 dient der Aufnahme eines nicht gezeigten und an einem Rotor befestigten Lagerbolzens, um den die Trennleiste 10 im Falle der pendelnden Aufhängung schwingen kann. Wird die Trennleiste 10 an dem Rotor oder als weitere Trennleiste 10' an einem Träger oder Gehäuse starr angebracht, ist eine zweite Bohrung vorzusehen, durch die ein weiterer Bolzen, eine Stange oder eine Schraube als Gegenlager gesteckt wird.

Die Anschliffe 14 bilden mit Seitenflächen 18 Schnittkanten, die bei beiden Ausführungsbeispielen geradlinig sind, aber - wie aus dem Stand der Technik bekannt - auch eine Wellenlinie aufweisen können und die Trennung des Häckselguts bewirken.

Die Erhebungen 16 liegen bei diesem Ausführungsbeispiel sämtlich auf der Längsmittenlinie der Trennleiste 10, 10', und es handelt sich hierbei um insgesamt 4 Stück. Diese Erhebungen 16 können sich in symmetrischer Anordnung auch seitlich der Längsmittenlinie befinden und in größerer oder kleinerer Anzahl vorgesehen werden. Werden mit derartigen Erhebungen 16 versehene Trennleisten 10 an einem schnell umlaufenden Rotor angebracht, ergibt sich die Grenze der Anordnungsvielfalt dort, wo eine ordnungsgemäße Auswuchtung nicht mehr gewährleistet ist.

Insbesondere in Zusammenschau mit Figur 2 ist zu erkennen, daß zwei der Erhebungen 16 auf einer Seite der Trennleiste 10 und zwei weitere auf der anderen Seite der Trennleiste 10 vorgesehen sind und zwar in abwechselnder Reihenfolge. Die Erhebungen 16 werden bei diesem Ausführungsbeispiel als Ausbuchtungen dadurch gebildet, daß kleine quadratische oder rechteckförmige Flächen mit einem Stempel oder dergleichen schräg aus den Seitenflächen 18 zu einer Seite der Trennleiste 10 gedrückt werden, bis jeweils eine am weitesten durchgedrückte Stirnkante 20 und daran anschließende Seitenkanten 22 merklich über die übrige Seitenfläche 18 überstehen. Infolge des Materialabrisses im Bereich der Stirn- und Seitenkanten 20, 22 ergeben sich scharfe Kanten, die bei einer Berührung mit dem Häckselgut auf dessen Oberfläche einwirken und es zerstören. Die Erhebungen 16 sind jeweils nur so hoch, daß in der Trennleiste 10 keine Ausnehmungen entstehen, in denen sich Häckselgut verfangen könnte.

Figur 2 zeigt, wie die Trennleisten 10 und die weiteren Trennleisten 10' innerhalb der Zerkleinerungsvorrichtung zueinander angeordnet sind - sie kämmen miteinander, wobei die Bohrungen 12 zur Befestigung an voneinander abgewandten Endbereichen gelegen sind. Zwischen den einander zugewandten Seitenflächen 18 der Trennleisten 10 und der weiteren Trennleisten 10' ergibt sich ein Spalt 24, durch den das Häckselgut während einer Relativbewegung zwischen den Trennleisten 10 und den weiteren Trennleisten 10' an den scharfkantigen Erhebungen 16 entlanggezogen wird. In herkömmlicher Weise können die Trennleisten 10 an einem umlaufenden Rotor pendelnd aufgehängt und die weiteren Trennleisten 10' starr in einem Gehäuse befestigt sein.

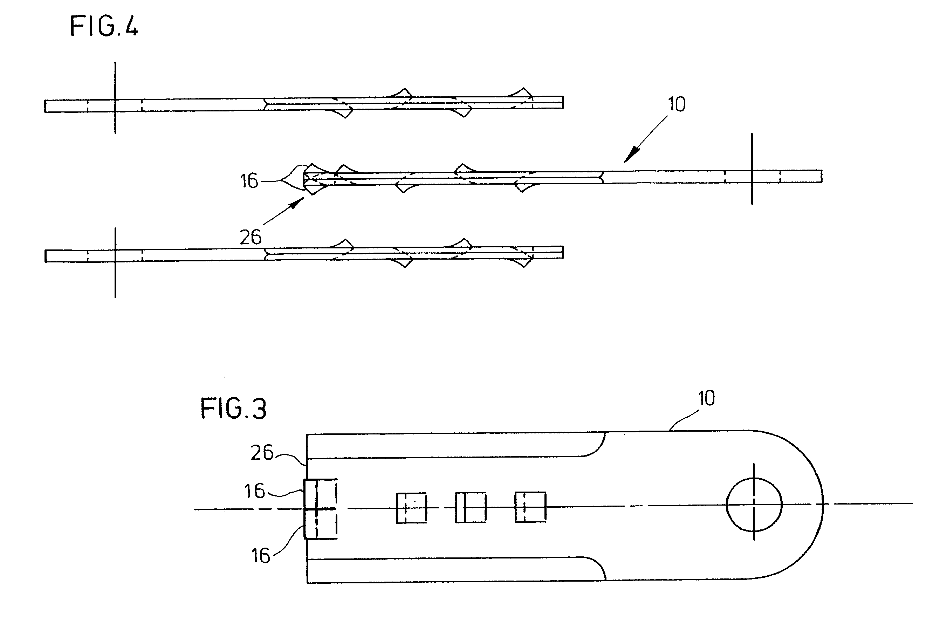

Eine in den Figuren 3 und 4 gezeigte zweite Ausführungsform einer Trennleiste 10, bzw. weiteren Trennleiste 10' unterscheidet sich von der vorbeschriebenen Ausführungsform durch zusätzliche Erhebungen 16 an einer zwischen den beiden Anschliffen 14 gelegenen Stirnseite 26, wobei auch diese zusätzlichen Erhebungen spiegelbildlich zur Längsmittenachse angeordnet sind. Eine der Erhebungen 16 ist nach einer Seite, die andere der Erhebungen 16 zu der anderen Seite gebogen.

Schließlich weicht eine dritte Ausführungsform einer Trennleiste 10, 10' in der Ausbildung von Erhebungen 16' an sich von den oben genannten Erhebungen 16 ab. Bei dieser Ausführungsform werden die Erhebungen 16' dadurch gebildet, daß der gesamte oder ein wesentlicher Bereich der Seitenflächen 18 durch Prägen, Rändeln, Fräsen oder dergleichen aufgerauht wird und somit scharfe Kanten 26 aufweist. Diese Trennleisten 10, 10' werden ebenfalls in der in Figur 2 gezeigten Weise zueinander angeordnet.

## Patentansprüche

1. Trennleiste (10) für die Zerkleinerung von Häckselgut, die während des Zerkleinerungsvorgangs zwischen weiteren Trennleisten (10') hindurchgeführt wird, gekennzeichnet durch scharfkantige Erhebungen (16), die auf mindestens einer der einander zugewandten Seitenflächen (18) der beteiligten Trennleisten (10, 10') aufgebracht sind.

2. Trennleiste nach Anspruch 1, dadurch gekennzeichnet, daß die Erhebungen (16) durch scharfkantige seitliche Ausbuchtungen der Trennleiste (10, 10') gebildet werden.

3. Trennleiste nach Anspruch 1, dadurch gekennzeichnet, daß die Erhebungen (16) durch Materialkanten infolge einer Oberflächenbearbeitung gebildet werden.

4. Trennleiste nach Anspruch 1, 2 oder 3, dadurch gekennzeichnet, daß jede der einander zugewandten Seitenflächen (18) der Trennleisten (10, 10') mit Erhebungen (16) versehen ist.

5. Trennleiste nach einem oder mehreren der vorherigen Ansprüche, dadurch gekennzeichnet, daß wenigstens einige der Trennleisten (10) pendelnd aufgehängt sind.

6. Trennleiste nach einem oder mehreren der vorherigen Ansprüche, gekennzeichnet durch Anschliffe (14) in den Seitenbereichen.

7. Trennleiste nach Anspruch 6, dadurch gekennzeichnet, daß die Anschliffe (14) einen Wellenschliff aufweisen.

8. Trennleiste nach einem oder mehreren der vorherigen Ansprüche, dadurch gekennzeichnet, daß an einer zwischen den Seitenflächen (18) gelegenen Stirnfläche (26) ebenfalls Erhebungen (16) vorgesehen sind.

FIG.1

14

10

12

16

18

14

FIG.2

10'

16 20 22 18

24

10

12

12

10'

24

12

10'

EP 0 457 122 A2

FIG.4

16

26

10

FIG.3

26

16

16

10

EP 0 457 122 A2

FIG.5

FIG. 6